# FASCICULE DE BREVET EUROPEEN

(11) **EP 3 458 411 B1**
(45) Date de publication et mention de la délivrance du brevet: **17.02.2021**
(21) Numéro de dépôt: 17724374.8
(22) Date de dépôt: 19.05.2017
(51) Int. Cl.: C01B 17/04, B01J 23/847, B01J 23/22, B01D 53/52, B01D 53/86, B01D 53/83

(54) **INSTALLATION ET PROCÉDÉ DE TRAITEMENT D'UN FLUX COMPRENANT DU SULFURE D'HYDROGÈNE**
ANLAGE UND VERFAHREN ZUR BEHANDLUNG EINES STROMS MIT SCHWEFELWASSERSTOFF
PLANT AND PROCESS FOR TREATING A STREAM COMPRISING HYDROGEN SULFIDE

(30) Priorité: 20.05.2016 FR 1654563
(43) Date de publication de la demande: 27.03.2019
(73) Titulaire: Centre National de la Recherche Scientifique, 75016 Paris (FR); Université de Lille, 59800 Lille (FR)
(72) Inventeur: LOFBERG, Axel, 59000 Lille (FR); GUERRERO, Jesus, 08222 Terassa (ES)
(74) Mandataire: Lavoix
(86) Numéro de dépôt international: PCT/EP2017/062172
(87) Numéro de publication internationale: WO 2017/198851

(56) Documents cités:
- EP-B1- 0 071 983
- US-A- 4 088 736
- US-B1- 6 596 253

## Description

La présente invention concerne une installation et un procédé de traitement du sulfure d'hydrogène comprenant au moins un système d'oxydation du sulfure d'hydrogène en soufre (S) et en eau (H₂O).

Le sulfure d'hydrogène (H₂S) est un sous-produit de procédés industriels notamment ceux de désulfuration des hydrocarbures fossiles tels que le raffinage et la production de biogaz. Il est toxique pour l'homme et pour l'environnement et constitue un poison pour la plupart des procédés catalytiques. Les procédés actuels de traitement de H₂S impliquent une séparation préalable des autres constituants des effluents à traiter, par adsorption ou lavage, et une oxydation ultérieure en soufre (S) via un procédé en plusieurs étapes (Procédé dit « Claus »). L'oxydation sélective de H₂S en S par l'oxygène (H₂S + 1/2 O₂ → S + H₂O) est une alternative intéressante. Ces procédés conduisent à la production de soufre qui est ensuite valorisé en acide sulfurique ou en fertilisant, par exemple. Les inconvénients de ces procédés sont toutefois (i) de produire des sous-produits comme SO₂ ou SO₃ si le catalyseur n'est pas sélectif, (ii) de nécessiter des mélanges H₂S-O₂ qui induisent une perte en sélectivité ainsi que des limitations en concentration des réactifs à cause de leur inflammabilité ou leur explosivité. Tous les procédés existants impliquent des conditions opératoires limitées par l'explosivité des mélanges H₂S-O₂. La réaction en excès de H₂S est plus favorable du point de vue de la sélectivité mais limitée par l'apport d'oxygène, alors que l'excès en oxygène conduit à une oxydation totale.

Les catalyseurs proposés pour cette réaction présentent de fortes désactivations liées au dépôt de soufre à la surface des catalyseurs ou à leur sulfuration.

Les procédés actuels comportent tous une première phase de séparation du sulfure d'hydrogène des autres composants du gaz à traiter, soit par l'utilisation d'adsorbeurs physiques, soit par lavage dans des solutions alcalines. Dans un second temps, l'H₂S est récupéré par désorption ou séparation des solutions de lavage. L'H₂S ainsi séparé est ensuite oxydé pour produire du soufre solide (S) par le procédé Claus qui lui-même comporte plusieurs étapes. La première, thermique, consiste à oxyder partiellement H₂S en SO₂ à haute température (>1000°C), la seconde, catalytique, comporte la réaction du SO₂ formé avec H₂S pour produire du S et de l'H₂O.

Actuellement l'élimination de l'H₂S d'effluents gazeux nécessite une séparation préalable par adsorption ou lavage et par un traitement consécutif via le procédé Claus.

Par ailleurs, l'utilisation des énergies renouvelables est nécessaire pour réduire les émissions à effet serre, or le sulfure d'hydrogène est produit en grandes quantités lors de la méthanisation de la biomasse pour la production de biogaz. Le développement de ces ressources alternatives nécessite donc la mise au point de méthodes efficaces et peu coûteuses d'élimination, voire de valorisation, du sulfure d'hydrogène.

A la connaissance des inventeurs, il n'y a pas eu encore de proposition d'un procédé de type périodique avec un vecteur d'oxygène solide pour l'oxydation sélective du H₂S (en S) et préférentielle (en présence d'autres réactifs comme le méthane).

Par contre, il y a eu plusieurs études concernant l'oxydation partielle du sulfure d'hydrogène dans des conditions de température et pression proches, mais en co-alimentant l'oxygène pour oxyder le H₂S.

Par exemple, les travaux de Palma et al. (Palma, D. Barba, H2S purification from biogas by direct selective oxidation to sulfur on V2O5-CeO2 structured catalysts, Fuel 135 (2014) 99-104,http://dx.doi.org/10.1016/j.fue1.2014.06.012; V. Palma, D. Barba, Low temperature catalytic oxidation of H2S over V205/Ce02 catalysts, Int J Hydrogen Energ 39 (2014), 21524-21530 http://dx.doi.org/10.1016/j.ijhydene.2014.09.120) proposent un système employant un solide avec du vanadium comme phase active et de l'oxyde de cérium comme support obtenant aussi autour de 100% de conversion en H₂S et en sélectivité. Bien qu'ils proposent l'utilisation de leurs catalyseurs pour le traitement du biogaz avec des concentrations en H₂S typiques (200ppm), ils ne mélangent pas les réactifs (H₂S et O₂) avec du CH₄ et du CO₂. Ils ne vérifient donc pas la réactivité du méthane et du dioxyde de carbone EP 0 071 983 B1 décrit un procédé pour éliminer des composés de soufre, en particulier l'hydrogène sulfuré, contenus dans des gaz consistant à faire passer les gaz sur une masse absorbante contenant des matériaux inertes réfractaires et des oxydes métalliques qui réagissent avec les composés de soufre en donnant des composés métalliques de soufre, et à régénérer la masse absorbante par oxydation des composés métalliques du soufre.

Soriano et al, (M.D. Soriano, J.M. Lopez Nieto, F. Ivars, P. Concepcion, E. Rodriguez-Castellon, Alkali-promoted V2O5 catalysts for the partial oxidation of H2S to sulphur, Catal Today 192 (2012) 28-35, doi:10.1016/j.cattod.2012.02.016 ; A. Reyes-Carmona, M.D. Soriano, J.M. Lopez Nieto, D.J. Jones, J. Jimenez-Jimenez, A. Jimenez-Lopez, E. Rodriguez-Castellon, Iron-containing SBA-15 as catalyst for partial oxidation of hydrogen sulfide, Catal Today 210 (2013) 117-123, http://dx.doi.org/10.1016/j.cattod.2012.11.016) proposent une étude similaire avec, cette fois, des concentrations initiales en H₂S plus élevées (1200ppm) ainsi qu'une température de réaction également supérieure (200°C). Ces études mettent en œuvre un mélange selon un ratio spécifique de sulfure d'hydrogène et de dioxygène et ne peuvent pas s'affranchir des limites d'explosivité du mélange sulfure d'hydrogène/dioxygène. Il est difficile d'obtenir à la fois une conversion et une sélectivité autour de 100%.

L'invention a pour but de résoudre un ou plusieurs, et de préférence l'ensemble, des problèmes techniques mentionnés ci-dessus.

Plus particulièrement, l'invention a pour but de résoudre le problème technique consistant à fournir un procédé et une installation permettant une oxydation du sulfure d'hydrogène fortement sélective en soufre, et en particulier en conservant une forte conversion de sulfure d'hydrogène.

L'invention a pour but de résoudre le problème technique consistant à fournir un procédé et une installation permettant une oxydation du sulfure d'hydrogène à une concentration en sulfure d'hydrogène dans le domaine d'explosivité d'un mélange comprenant du sulfure d'hydrogène et du dioxygène, c'est-à-dire que le flux comprenant le sulfure d'hydrogène, de préférence sous forme gazeuse, présente une concentration en sulfure d'hydrogène dont la transformation stœchiométrique en soufre et eau nécessiterait un mélange comprenant du sulfure d'hydrogène et du dioxygène situé dans le domaine d'explosivité.

L'invention a pour but de résoudre le problème technique consistant à fournir un procédé et une installation permettant une faible désactivation du catalyseur d'oxydation du sulfure d'hydrogène.

L'invention a pour but de résoudre ce ou ces problèmes techniques dans le cadre d'un procédé et d'une installation de raffinage et/ou de production de biogaz.

Plus particulièrement, l'invention a pour but de résoudre le problème technique consistant à fournir une installation permettant une oxydation du sulfure d'hydrogène fortement sélective en soufre, et en particulier en conservant une forte conversion de sulfure d'hydrogène en limitant l'oxydation des autres gaz présents, comme par exemple le méthane et/ou le dioxyde de carbone.

### Résumé de l'invention

L'invention concerne une installation ou un procédé de traitement du sulfure d'hydrogène, ladite installation ou ledit procédé comprenant au moins un système d'oxydation du sulfure d'hydrogène en soufre (S), de préférence le sulfure d'hydrogène et le soufre étant sous forme gazeuse, et en eau (H₂O) par un solide réactif mettant en œuvre la réaction H₂S + sol-O → sol-R + H₂O + S où sol-O et sol-R symbolisent des constituants du solide réactif sous formes oxydée et réduite, respectivement, et au moins un système d'oxydation par un agent oxydant du solide réactif présent à l'état réduit, le système d'oxydation du sulfure d'hydrogène en soufre et le système d'oxydation du solide réactif étant agencés pour que le sulfure d'hydrogène ne soit pas mis en contact avec l'agent oxydant le solide réactif.

L'invention concerne également une installation ou un procédé de traitement d'au moins un flux comprenant du sulfure d'hydrogène, ladite installation ou le procédé comprenant l'alternance, de préférence répétée, d'une étape d'oxydation du sulfure d'hydrogène en soufre et eau en présence d'un solide réactif présent à l'état oxydé, et réduit lors de l'oxydation du sulfure d'hydrogène, mettant en œuvre la réaction H₂S + sol-O → sol-R + H₂O + S où sol-O et sol-R symbolisent des constituants du solide réactif sous formes oxydée et réduite, respectivement, et d'une étape d'oxydation du solide réactif présent à l'état réduit par au moins un agent oxydant pour obtenir un solide réactif à l'état oxydé, ledit procédé comprenant l'obtention d'un flux comprenant du soufre par oxydation du sulfure d'hydrogène

Plus particulièrement, selon un mode de réalisation, l'installation comprend une conduite d'alimentation d'un flux comprenant du sulfure d'hydrogène vers un système d'oxydation du sulfure d'hydrogène en soufre et en eau et une conduite d'évacuation d'un flux comprenant du soufre.

Selon une variante, l'installation comprend, en aval du système d'oxydation du sulfure d'hydrogène en soufre sous forme gazeuse, un dispositif de séparation de soufre du flux comprenant initialement le soufre, ledit dispositif de séparation étant de préférence un dispositif de condensation du soufre sous forme liquide ou solide.

Selon un mode de réalisation, l'installation comprend un ou plusieurs dispositifs (140, 340, 440) de permutation entre l'entrée (111, 311, 318) du sulfure d'hydrogène dans le système d'oxydation (110, 310, 410) du sulfure d'hydrogène en soufre et l'entrée (113, 313, 418) de l'agent oxydant le solide réactif dans le système d'oxydation (110, 310, 410) du solide réactif.

Typiquement, le sulfure d'hydrogène et/ou le soufre sont sous forme gazeuse.

Typiquement, le système d'oxydation du sulfure d'hydrogène en soufre comprend un réacteur d'oxydation du sulfure d'hydrogène en présence d'un solide réactif présent à l'état oxydé. Le solide réactif est typiquement réduit lors de l'oxydation du sulfure d'hydrogène.

Selon un mode de réalisation préféré, le système d'oxydation du solide réactif comprend une alimentation en au moins un agent oxydant, notamment un agent comprenant du dioxygène, comme par exemple de l'air, par exemple sous forme gazeuse. L'agent oxydant sert avantageusement pour l'oxydation du solide réactif présent à l'état réduit.

Le terme « oxygène » signifie l'élément chimique sous toutes les formes. L'oxygène moléculaire est désigné par « dioxygène » ou O₂, sauf précision contraire.

Selon une variante, le flux d'agent oxydant est alimenté à contre-courant du flux comprenant le solide réactif, si le solide réactif circule au sein du réacteur d'oxydation du solide réactif.

Selon un mode de réalisation, l'installation et le procédé de l'invention comprennent une boucle de recyclage du solide réactif, ladite boucle comprenant un système d'oxydation du solide réactif présent à l'état réduit en présence d'un agent oxydant et un système de réduction du solide réactif présent à l'état oxydé, ledit système de réduction du solide réactif formant également ledit système d'oxydation du sulfure d'hydrogène en présence d'un solide réactif présent à l'état oxydé.

Selon une variante, un flux comprenant l'agent oxydant sortant du réacteur d'oxydation du solide réactif est collecté à une concentration réduite en agent oxydant par rapport à la concentration en agent oxydant du flux comprenant l'agent oxydant entrant dans le réacteur d'oxydation du solide réactif.

Selon une variante, le flux comprenant du sulfure d'hydrogène comprend un hydrocarbure, par exemple du méthane et/ou du monoxyde et/ou dioxyde de carbone, éventuellement en présence d'un gaz inerte comme par exemple le diazote.

De préférence, l'étape d'oxydation du sulfure d'hydrogène se réalise en l'absence d'agent servant à oxyder le solide réactif, et en particulier en l'absence de dioxygène.

De préférence, l'oxydation du sulfure d'hydrogène est réalisée dans des conditions limitant l'oxydation totale du sulfure d'hydrogène en oxyde de soufre.

La présente invention concerne encore une installation et un procédé de méthanisation mettant en œuvre l'installation et/ou le procédé de traitement d'H₂S selon l'invention.

La présente invention concerne encore une installation et un procédé de raffinage d'hydrocarbures mettant en œuvre l'installation et/ou le procédé de traitement d'H₂S selon l'invention, comme par exemple en pétrochimie.

La présente invention concerne encore une installation et un procédé de craquage catalytique fluidisé ou de combustion en boucle chimique.

### Description détaillée de l'invention

Le procédé de l'invention comprend de préférence un solide réactif ou catalytique exposé de manière alternée et de préférence répétée à chacun des réactifs de l'oxydation sélective (H₂S et O₂) et où il fait office de vecteur d'oxygène. Dans un premier temps le solide réagit avec le sulfure d'hydrogène pour former du soufre et de l'eau, ensuite il réagit avec l'O₂ pour se recharger en oxygène. Durant cette seconde phase, le soufre éventuellement déposé lors de la première phase est ré-oxydé par l'oxygène, ce qui permet avantageusement d'éviter la désactivation du solide réactif par accumulation de soufre, le cas échéant.

Ce procédé élimine les principaux inconvénients décrits ci-dessus permettant notamment : (i) d'obtenir d'excellentes sélectivités, (ii) d'éliminer toutes limitations de concentrations de réactifs en l'absence de mélanges explosifs et (iii) de traiter des flux de gaz contenant d'autres molécules réactives tels que les hydrocarbures, comme par exemple le méthane, ou encore le dioxyde de carbone, sans séparation préalable.

L'un des principaux inconvénients des techniques antérieures est la limitation d'équilibre de réaction :

2 H₂S + SO₂ → 3 S +2 H₂O Δ H₂₉₈°K = -234 Kj / mol *(eq. 1)*

Au contraire, l'oxydation sélective du H₂S est pratiquement irréversible et ne présente pas de limitation thermodynamique.

2 H₂S + O₂ → 2 S + H₂O ΔH₂₉₈°K = -531 Kj / mol *(eq.2)*

Toutefois, le rendement en soufre dépend de la performance des catalyseurs notamment pour éviter l'oxydation totale de H₂S en SO₂ ou SO₃ :

2 H₂S + 3 O₂ → 2 SO₂ + 2 H₂O ΔH₂₉₈°K = -1124 Kj / mol *(eq.3)*

S + O2 → SO₂ ΔH₂₉₈°K = - 297° Kj / mol *(eq .4)*

2 S + 3 O₂ → 2 SO₃ ΔH₂₉₈°K = -882 Kj / mol *(eq.5)*

Le rendement en soufre dépend des performances catalytiques du matériau (conversion, sélectivité) ainsi que des conditions de mise en œuvre (température de réaction et ratio H₂S/O₂).

En plus de la sélectivité, il faut aussi considérer une probable désactivation du catalyseur à cause du dépôt de soufre sur le catalyseur ainsi que la possibilité d'une sulfuration du métal ou de son oxyde parce qu'il peut aussi affecter la stabilité du catalyseur.

En résumé, l'oxydation sélective du H₂S *(eq.2)* présente l'avantage de conduire directement à la production de S sans produire d'autres sous-produits problématiques (SO₂/SO₃) à condition d'avoir un système catalytique performant et sélectif. Il présente toutefois l'inconvénient selon l'art antérieur de nécessiter des mélanges H₂S-O₂ pouvant nuire à la sélectivité et/ou limiter les conditions opératoires au vu de l'inflammabilité du mélange.

La présente invention concerne un procédé et une installation répondant à ces problématiques techniques.

Avantageusement, la présente invention concerne un procédé et une installation mettant en œuvre la réaction 2 H₂S + O₂ → 2 S + H₂O au sein d'un ou d'une combinaison de plusieurs réacteurs d'oxydation du sulfure d'hydrogène et de réduction du dioxygène.

Avantageusement, la présente invention concerne un procédé et une installation mettant en œuvre la réaction H₂S + sol-O → sol-R + H₂O + S *(eq.6)* où sol-O et sol-R symbolisent des constituants du solide réactif sous formes oxydée et réduite, respectivement. Le soufre est ensuite avantageusement libéré sous forme gazeuse.

Avantageusement, l'invention concerne un procédé dans lequel le solide réactif (ou catalytique) est exposé de manière alternée et de préférence répétée à chacun des réactifs pour l'oxydation de H₂S (sulfure d'hydrogène et dioxygène). Avantageusement, le solide réactif fait office de vecteur d'oxygène. Dans un premier temps le solide réagit avec le H₂S pour former le soufre et l'eau. Dans le second temps il réagit avec le dioxygène pour se recharger en oxygène.

L'élimination du sulfure d'hydrogène par oxydation sélective ne se fait pas selon l'art antérieur à cause de la désactivation rapide des catalyseurs et de la faible sélectivité en soufre due à la compétition de différentes réactions. De plus, les conditions opératoires sont en général limitées par l'explosivité des mélanges H₂S-O₂ et donc peu adaptées au traitement d'effluents fortement concentrés en H₂S tels qu'ils peuvent résulter de la désulfuration en raffinage pétrolier ou du biogaz. Dans tous les cas, selon les techniques antérieures, l'H₂S doit être séparé an préalable des effluents par adsorption ou lavage ce qui implique un procédé à multiples étapes et fortement énergivore et/ou consommateur d'eau.

Avantageusement, avec le procédé et l'installation selon l'invention la réaction d'oxydation totale du soufre produit est évitée par l'absence de dioxygène durant la phase d'oxydation du sulfure d'hydrogène. Avantageusement, selon l'invention, l'oxygène participant à la réaction d'oxydation du sulfure d'hydrogène en soufre est apporté par le solide réactif.

Avantageusement, la sélectivité en soufre peut donc être supérieure à 95%, de préférence supérieure à 99%, et atteindre idéalement 100%.

Avantageusement, la désactivation du solide réactif peut être évitée grâce à la réoxydation du solide réactif lors de la phase de réaction avec l'agent oxydant, typiquement, le dioxygène.

La concentration en H₂S n'est pas limitée par l'explosivité des mélanges H₂S-O₂ puisque ces deux réactifs ne sont jamais en contact.

L'oxydation sélective du H₂S peut être menée en présence d'autres molécules telles que le méthane (et le CO₂ dans le cas du biogaz) sans séparation préalable.

Le procédé peut être optimisé aussi bien pour le traitement d'effluents concentrés en H₂S ou au contraire fortement dilués.

Le procédé allie donc l'avantage de l'oxydation sélective du H₂S par rapport aux autres voies d'oxydation à savoir incluant des réactions exothermiques, avec un fonctionnement stable, une haute sélectivité en S (supérieure à 95%, de préférence supérieure à 99% et idéalement 100%), une forte conversion de H₂S (supérieure à 95%, de préférence supérieure à 99% et idéalement 100%) et une conversion négligeable de CH₄ et CO₂ (0%).

Le procédé permet d'éliminer H₂S de manière sélective (production de S) dans des effluents gazeux sans limitation d'explosibilité (ou d'explosivité) car réalisé sans contact direct avec le dioxygène, et avantageusement d'éliminer essentiellement totalement H₂S (supérieure à 99% et idéalement 100%).

En outre, ce procédé permet de traiter des effluents complexes notamment des hydrocarbures, voire du biogaz, sans nécessiter de séparation préalable du sulfure d'hydrogène.

Le recyclage périodique du solide réactif permet la réoxydation du matériau et donc le maintien des performances.

L'invention concerne encore un procédé et une installation d'élimination essentiellement totale du sulfure d'hydrogène à partir de différents types de sources (effluents d'installations de désulfuration, biogaz, ...). Par « essentiellement totale » ou des termes équivalents, on entend éliminer le sulfure d'hydrogène de manière à ce qu'il soit présent dans le ou les effluents susceptibles de le contenir à une concentration inférieure aux standards et aux normes applicables selon l'usage.

Avantageusement, le solide étant régénéré à chaque cycle, la désactivation par soufre est évitée. H₂S et S ne sont jamais en contact direct avec l'agent oxydant le solide réactif, typiquement O₂ (réactif), permettant ainsi de limiter la réaction d'oxydation totale du soufre dans la première phase du procédé et donc d'optimiser la sélectivité.

Avantageusement, selon une variante, le procédé et l'installation selon l'invention fonctionne en l'absence d'oxygène gazeux lors de la réaction de H₂S avec le solide réactif. Outre l'amélioration de la sélectivité, ce système n'est plus limité par l'explosivité de mélanges H₂S/O₂, permettant ainsi le traitement d'effluents fortement concentrés en H₂S.

De plus, par la réactivité supérieure de H₂S par rapport à des hydrocarbures (notamment le méthane), l'invention concerne également un procédé et une installation de traitement de mélanges H₂S-CH₄ ne nécessitant pas de séparation préalable du H₂S. Cette particularité est intéressante aussi bien pour le traitement d'hydrocarbures contenant du H₂S mais aussi pour des mélanges plus complexes comme le biogaz (typiquement CH₄-CO₂-H₂S).

Selon un mode de réalisation, à la température de réaction envisagée, typiquement de 150°C à 250°C, on est à la limite par rapport à la température de rosée du soufre (entre 120-150°C). On peut donc avantageusement collecter la majorité du soufre produit dans un condensateur après le réacteur.

Selon un mode de réalisation, le ou les réacteurs utilisés pour la réaction d'oxydation du H₂S sont constitués d'un réacteur lit catalytique fixe traversé par un flux de gaz constitué du mélange de sulfure d'hydrogène et oxygène éventuellement dilué. L'oxydation du sulfure d'hydrogène se réalise avantageusement à une température allant de 120 à 250°C, par exemple de 150°C à 250°C ou encore de 120°C à 200°C et/ou à pression atmosphérique (101325 Pa).

Selon un mode de réalisation, l'oxydation du solide réactif se réalise à une température allant de 150 à 250 °C et/ou à pression atmosphérique (101325 Pa).

Selon un mode de réalisation, la réaction d'oxydation du H₂S est mise en œuvre en faisant subir au solide réactif des cycles répétés d'oxydation-réduction en l'exposant au sulfure d'hydrogène et au dioxygène de manière alternée. En pratique ceci est réalisé en alimentant le réacteur à lit fixe de manière périodique.

Il s'agit de la méthode la plus simple pour réaliser ce type de réaction. D'autres variantes existent notamment pour améliorer la performance du procédé à l'échelle industrielle comme par exemple en mettant en œuvre dans l'installation ou le procédé de l'invention des réacteurs à lit fluidisé circulant. Dans ce cas, le solide réactif est transporté entre au moins deux réacteurs distincts où il est exposé à chacun des réactifs indépendamment. Ce type d'installation et de procédé présentent par ailleurs l'avantage de pouvoir optimiser de manière plus efficace chacune des phases de réaction et donc une exploitation encore plus efficace de l'invention.

Selon une variante, l'installation (ou le procédé) de l'invention comprend un premier réacteur formant un système d'oxydation du sulfure d'hydrogène en soufre et un second réacteur formant un système d'oxydation du solide réactif, le premier réacteur étant alimenté par un flux contenant du sulfure d'hydrogène lorsque le premier réacteur forme un système d'oxydation du sulfure d'hydrogène en soufre, et le second réacteur étant alimenté par un flux contenant au moins un agent oxydant lorsque le second réacteur forme un système d'oxydation du solide réactif, le solide réactif circulant à l'état réduit du premier réacteur vers le second réacteur et à l'état oxydé du second réacteur vers le premier réacteur.

Selon une variante, l'installation (ou le procédé) de l'invention comprend au moins un réacteur d'oxydation (110) formant alternativement un système d'oxydation du sulfure d'hydrogène en soufre et formant un système d'oxydation du solide réactif, le réacteur d'oxydation (110) étant alternativement alimenté par un flux (111) contenant du sulfure d'hydrogène lorsque le réacteur forme un système d'oxydation du sulfure d'hydrogène en soufre, et étant alimenté par un flux (113) contenant au moins un agent oxydant lorsque le réacteur d'oxydation (110) forme un système d'oxydation du solide réactif, le solide réactif étant de préférence immobilisé dans le réacteur d'oxydation (110).

Selon une variante, l'installation (ou le procédé) de l'invention comprend au moins deux réacteur (310, 410) formant chacun alternativement et inversement un système d'oxydation du sulfure d'hydrogène en soufre et un système d'oxydation du solide réactif, un premier réacteur (310) étant alternativement alimenté (i) par un flux contenant du sulfure d'hydrogène (311) lorsque le réacteur forme un système d'oxydation du sulfure d'hydrogène en soufre, ou (ii) par un flux contenant au moins un agent oxydant (313) lorsque le premier réacteur (310) forme un système d'oxydation du solide réactif, et un second réacteur (410) étant alternativement alimenté (i) par un flux contenant du sulfure d'hydrogène (311) lorsque le second réacteur (410) forme un système d'oxydation du sulfure d'hydrogène en soufre et lorsque le premier réacteur (310) forme un système d'oxydation du solide réactif, ou (ii) par un flux contenant au moins un agent oxydant (313) lorsque le second réacteur (410) forme un système d'oxydation du solide réactif et lorsque le premier réacteur (310) forme un système d'oxydation du sulfure d'hydrogène en soufre, le solide réactif étant de préférence immobilisé dans le premier réacteur (310) et le second réacteur (410).

L'invention concerne une installation mettant en œuvre un procédé tel que défini selon l'un quelconque des modes de réalisation, variantes, aspects préférés ou avantageux de l'invention, y compris selon l'une quelconque de leurs combinaisons.

L'invention concerne un procédé mettant en œuvre une installation telle que définie selon l'un quelconque des modes de réalisation, variantes, aspects préférés ou avantageux de l'invention, y compris selon l'une quelconque de leurs combinaisons.

Selon une variante, la concentration en H₂S dans le flux entrant dans le système d'oxydation d'H₂S est faible, typiquement supérieure à 0% et inférieure ou égale à 3%, ou supérieure à 0% et inférieure ou égale à 1%, ou encore supérieure à 0% et inférieure ou égale à 0,5%. Ce peut être le cas par exemple dans des applications où l'élimination du H₂S est considérée. Une quantité en dioxygène en excès par rapport à la stœchiométrie peut également être envisagée pour assurer la réoxydation totale du solide réactif et du soufre déposé.

Selon une variante, la concentration en H₂S dans le flux entrant dans le système d'oxydation d'H₂S est supérieure à 3 et inférieure ou égale à 4%.

Selon une variante, la concentration en H₂S dans le flux entrant dans le système d'oxydation d'H₂S est supérieure à 4%.

Selon une variante, la concentration en H₂S dans le flux entrant dans le système d'oxydation d'H₂S est inférieure à 44%.

Selon une variante, la concentration en H₂S dans le flux entrant dans le système d'oxydation d'H₂S est supérieure à 44%.

Avantageusement, la quantité de solide réactif est suffisante pour oxyder la quantité d'H₂S mise en jeu. La quantité d'H₂S dépend de la concentration en H₂S, du débit total du flux contenant H₂S et de la durée de l'oxydation d'H₂S (temps de séjour dans le réacteur d'oxydation). Selon une variante, le nombre de moles d'H₂S est inférieur ou égal, au nombre de moles d'oxygène disponible pour l'oxydation d'H₂S. Ce nombre de moles d'oxygène disponible dépend de la nature du solide réactif, en particulier à l'état oxydé. Selon une variante, le nombre de moles d'oxygène disponible, sous forme de dioxygène, pour l'oxydation du solide réactif est au moins égal ou supérieur, au nombre de moles d'oxygène consommé lors de l'oxydation d'H₂S (ou la réduction du solide réactif par H₂S).

Selon une variante, le flux comprenant le sulfure d'hydrogène présente une concentration en sulfure d'hydrogène dont la transformation stœchiométrique en soufre et eau nécessiterait un mélange comprenant du sulfure d'hydrogène et du dioxygène situé dans le domaine d'explosivité.

Avantageusement, l'oxydation du sulfure d'hydrogène présente une sélectivité pour la production de soufre supérieure à 90%, et de préférence supérieure à 95%.

Avantageusement, l'oxydation du sulfure d'hydrogène présente une conversion en soufre supérieure à 50%, et de préférence supérieure à 80%, et encore de préférence supérieure à 90%.

Un avantage du procédé selon l'invention est d'être indépendant de la concentration d'H₂S.

Un avantage du procédé selon l'invention est de pouvoir être mis en œuvre avec un flux entrant contenant, outre du H₂S, d'autre gaz comme par exemple des hydrocarbures (alcanes, alcènes, et notamment le méthane, etc.) car il est mis en œuvre à basse température, n'oxydant pas ces autres gaz dans les conditions d'oxydation du H₂S.

Le principe de l'invention consiste avantageusement à employer un solide réactif ayant des propriétés particulières :
1. présenter une capacité de stockage et de transfert d'oxygène ;
2. permettre l'activation du sulfure d'hydrogène ;
3. dans les conditions de mise en œuvre, conduire sélectivement au soufre et à l'eau (H₂S + Sol-O→ S + H₂O+ Sol-R) et non à l'oxydation totale (H₂S + Sol-O → SO₂ + H₂O+ Sol-R) (Sol-O et Sol-R représentent le solide réactif à l'état oxydé et réduit, respectivement).
   La formation de sous-produits est ainsi avantageusement limitée. La formation de SO₂ est avantageusement limitée dans la mesure du possible mais n'est pas rédhibitoire dans la mesure où c'est toujours plus favorable avoir dans le débit de sortie SO₂ en lieu de H₂S.
4. La capacité de stockage d'oxygène est avantageusement reconstituée par réoxydation par O₂ *(eq.4).*

Les conditions 1 et 4 ci-dessus sont en général assurées par un solide comprenant au moins un oxyde réductible. La condition 2 ci-dessus peut être assurée par ce même oxyde ou par une autre phase solide associée au premier, par exemple un métal supportant ou supporté par l'oxyde réductible. La condition 3 ci-dessus est déterminée par la nature de l'oxyde ou de l'ensemble des phases présentes dans le solide réactif, ainsi que des conditions opératoires d'oxydation et réduction du solide réactif.

L'activité et la sélectivité du solide est assurée par la présence d'un oxyde réductible faisant office de vecteur d'oxygène et d'activation du H₂S en même temps.

Avantageusement, le procédé de l'invention est mis en œuvre sur plusieurs cycles répétés d'oxydation du sulfure d'hydrogène et du solide réactif, par exemples sur au moins 5, 10, 20, 30, 40, 50, ou 100 cycles. Le solide réactif peut être déchargé et remplacé par un nouveau solide réactif si besoin pour recommencer de nouveaux cycles d'oxydations.

Avantageusement, le procédé et l'installation selon l'invention fonctionnent en continu, c'est-à-dire que la production de soufre est continue à partir d'un flux continu contenant le sulfure d'hydrogène.

Alternativement, le procédé et l'installation selon l'invention fonctionnent en discontinu ou semi-continu, c'est-à-dire que la production de soufre est discontinue ou semi-continue à partir d'un flux discontinue ou semi-continue contenant le sulfure d'hydrogène.

L'invention met donc en œuvre, selon un autre aspect, un solide réactif (qui peut être aussi dénommé catalyseur) présentant la formule chimique suivante et sa mise en œuvre à titre de solide réactif notamment dans l'installation et/ou le procédé selon l'invention :
El1-Ox1
où El1 comprend ou consiste en l'un des éléments suivants pris isolément ou selon l'une quelconque de leurs combinaisons et choisi parmi: Bi, Co, Cu, Fe, Ir, Mo, Pb, Pd, Re, Rh, Ru, Sb, V et les oxydes et hydroxydes comprenant un ou plusieurs de ces éléments;
où Ox1 comprend ou consiste en l'un des éléments suivants pris isolément ou en combinaison et choisi parmi: Al, Ce, Ti, Mg, Si, Ta et leurs oxydes;

Le solide réactif peut contenir à l'état initial des hydroxydes. Les hydroxydes vont alors se transformer en oxydes en cours d'oxydation du solide réactif.

Selon un mode de réalisation spécifique, Ox1 comprend ou consiste en l'un des éléments suivants pris isolément ou selon l'une quelconque de leurs combinaisons et choisi parmi: Al₂O₃, CeO₂, TiO₂, MgO, SiO₂ et Ta₂O₅.

Selon un mode de réalisation spécifique, El1 comprend ou consiste en l'un des éléments suivants pris isolément ou selon l'une quelconque de leurs combinaisons et choisi parmi: V, Cu, Mo et Pb.

Selon un mode de réalisation spécifique, El1 comprend ou consiste en un oxyde de El1 supporté sur un dioxyde de titane, et en particulier en un oxyde de vanadium supporté sur un dioxyde de titane.

Les solides réactifs à base de V supporté sont bien connus pour l'oxydation partielle du sulfure d'hydrogène dans des réacteurs classiques (co-alimentés), ils présentent donc des propriétés d'activation d'H₂S intéressantes.

L'invention concerne en particulier la mise en œuvre d'un solide réactif à base des particules d'oxyde de vanadium (V₂O₅) en particulier supportées sur dioxyde de titane (TiO₂). Avantageusement, le support agit essentiellement comme phase inerte dans cette réaction et au même temps favorise la dispersion du V₂O₅. Ce dernier agit avantageusement comme vecteur d'oxygène par oxydation et réduction sous O₂ et H₂S respectivement. Il permet avantageusement la bonne activation du sulfure d'hydrogène et donc des conversions élevées. Dans ces conditions, la sélectivité lors de l'oxydation du H₂S est excellente alors qu'à une température réactionnelle plus élevée (par exemple à 250°C) ces mêmes éléments conduisent à une significative production du SO₂ dans les mêmes conditions opératoires.

De préférence, le solide réactif présente un rapport El1/(El1+Ox1) en poids allant de 0,005 à 1.

Avantageusement, le solide réactif est du V supporté sur du TiO₂ (VATiO2), de préférence avec un rapport V/(V+TiO2) allant de 0,005 à 1 , et de préférence de 0,0077.

La quantité de V₂O₅ est avantageusement suffisante pour convertir au moins à 90% et de préférence au moins 99% le sulfure d'hydrogène. La quantité de V₂O₅ est par exemple de 1,5 ou 3 fois supérieure (en moles) à la quantité de H₂S traité par cycle.

La présente invention est également illustrée par les modes de réalisation selon les figures décrites ci-après :

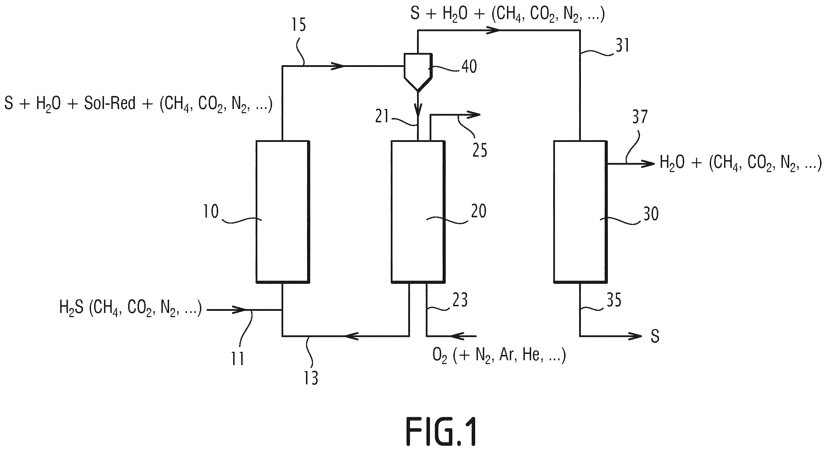

La figure 1 représente schématiquement une variante d'une installation et un procédé selon la présente invention. Selon la figure 1, le solide réactif circule entre deux réacteurs, à savoir le réacteur d'oxydation de sulfure d'hydrogène 10 et le réacteur d'oxydation du solide réactif 20. Avantageusement, le procédé selon la figure 1 fonctionne en continu. Les réacteurs 10 et 20 sont typiquement de type fluidisé. Selon la figure 1, un système d'oxydation du sulfure d'hydrogène comprend un réacteur 10 d'oxydation du sulfure d'hydrogène lequel comprend une conduite 11 d'entrée d'un flux gazeux comprenant du sulfure d'hydrogène, éventuellement en mélange avec d'autres gaz comme du méthane, du dioxyde de carbone, du diazote et l'un quelconque de leurs mélanges. Le réacteur d'oxydation 10 comprend une conduite de sortie 15 des gaz d'oxydation comprenant du soufre, de l'eau, un solide réduit, provenant de la réaction d'oxydation mise en œuvre dans le réacteur d'oxydation 10, ainsi qu'éventuellement d'autres gaz comme le méthane, le dioxyde de carbone, le diazote, etc. et l'un quelconque de leurs mélanges. Selon un mode de réalisation, le solide réactif est injecté en entrée du réacteur 10 d'oxydation du sulfure d'hydrogène avec un flux de gaz contenant le sulfure d'hydrogène et éventuellement d'autres composés gazeux comme le méthane, le dioxyde de carbone, le diazote, etc., et l'un quelconque de leurs mélanges. En sortie du réacteur d'oxydation 10, le solide réactif est à l'état réduit et contenu dans le flux de sortie 15 lequel est avantageusement amené vers un dispositif 40 de séparation du solide réactif du gaz contenant le soufre et la vapeur d'eau ainsi que les autres constituants gazeux éventuellement présents. Le solide réactif à l'état réduit est injecté via la conduite 21 dans un réacteur 20 d'oxydation du solide réactif. Le solide réactif à l'état réduit est oxydé dans le réacteur 20 d'oxydation grâce à un agent oxydant, typiquement du dioxygène, éventuellement en présence d'autres gaz comme par exemple du diazote, de l'argon, de l'hélium, etc. et l'un quelconque de leurs mélanges, entrant de préférence à contre-courant le réacteur d'oxydation 20 par une conduite 23. La conduite de sortie 25 du flux comprenant l'agent oxydant présente une concentration faible en agent oxydant suite à sa consommation dans le réacteur d'oxydation 20. Le dispositif peut prévoir un recyclage de l'agent oxydant de la conduite de sortie 25 vers la conduite d'entrée 23. Avantageusement, le solide réactif oxydé est recueilli en sortie du réacteur d'oxydation 20 et circule dans la conduite 13 reliant le réacteur 20 d'oxydation du solide réactif et le réacteur 10 d'oxydation du sulfure d'hydrogène. Le flux contenant le soufre, la vapeur d'eau, et éventuellement les autres composés gazeux provenant de la séparation du flux de sortie de la conduite 15 peut être envoyé vers un condenseur 30 par l'intermédiaire de la conduite 31. Ainsi on peut séparer le soufre élémentaire récupéré dans une conduite 35 du reste du flux gazeux par exemple récupéré dans une conduite 37.

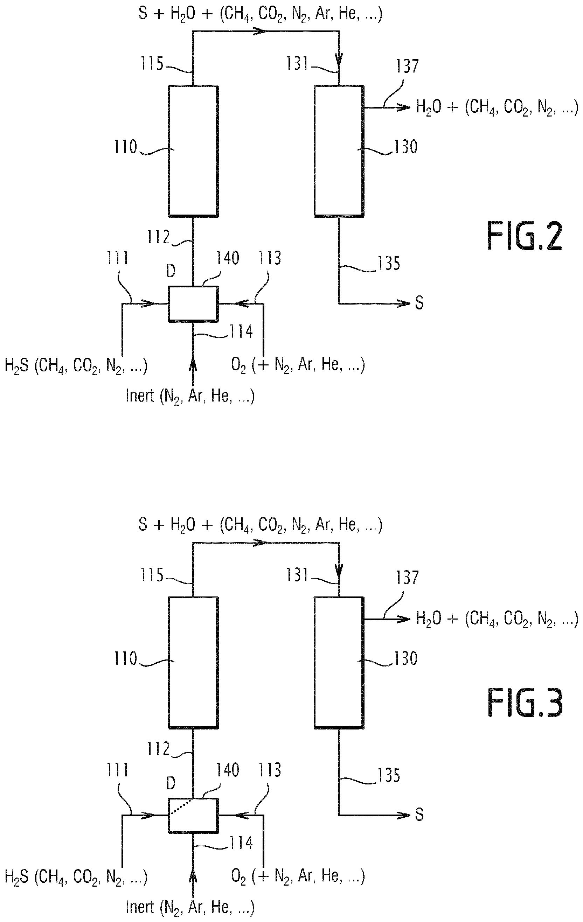

La figure 2 représente une vue schématique d'une variante d'une installation et un procédé selon la présente invention. Selon la figure 2, l'installation et le procédé comprennent un réacteur à alimentation périodique. Selon la figure 2, le solide réactif est avantageusement immobilisé au sein d'un réacteur d'oxydation 110. Il peut s'agit typiquement d'un réacteur à lit fixe. Les références de la figure 2 correspondent aux références de la figure 1 auxquelles une centaine a été ajoutée, à l'exception des modifications liées à la différence d'installation et de mise en œuvre du procédé. Notamment, en entrée du réacteur d'oxydation 110, le dispositif et le procédé comprennent une conduite 111 amenant un flux gazeux comprenant le sulfure d'hydrogène et éventuellement les autres gaz présents comme ceux précités en communication avec un dispositif 140 de permutation des flux de gaz. Le dispositif 140 de permutation des flux de gaz comprend également une conduite d'entrée 114 de gaz inerte(s) comme par exemple de diazote, d'argon, d'hélium, etc., formant gaz de purge du réacteur d'oxydation 110. Le dispositif de permutation 140 comprend également une conduite d'entrée 113 comprenant au moins un agent oxydant comme du dioxygène, et éventuellement d'autres gaz neutres comme ceux précités. Les figures 3 à 5 présentent les trois modes de fonctionnement d'une installation et procédé selon la figure 2.
Selon la figure 3, le dispositif de permutation 140 autorise la circulation du flux contenant le sulfure d'hydrogène amené par la conduite 111 vers la conduite 112 en communication avec le réacteur d'oxydation 110. Le sulfure d'hydrogène entrant le réacteur d'oxydation 110 est oxydé en présence du solide réactif notamment en soufre et en eau. Ainsi le réacteur d'oxydation 110 forme un système d'oxydation du sulfure d'hydrogène. Le flux contenant le sulfure d'hydrogène circule du réacteur d'oxydation 110 vers le condenseur 130 par l'intermédiaire des conduites 115 et 131 pouvant former une seule et même conduite de circulation du flux gazeux contenant le soufre et l'eau. Le condenseur 130 permet la séparation du soufre et son évacuation via une conduite 135 du flux gazeux comprenant l'eau et les éventuels autres gaz présents ainsi que leur évacuation via la conduite 137. Selon le fonctionnement illustré en figure 3, le flux contenant le sulfure d'hydrogène n'est pas mis en contact avec l'agent oxydant.

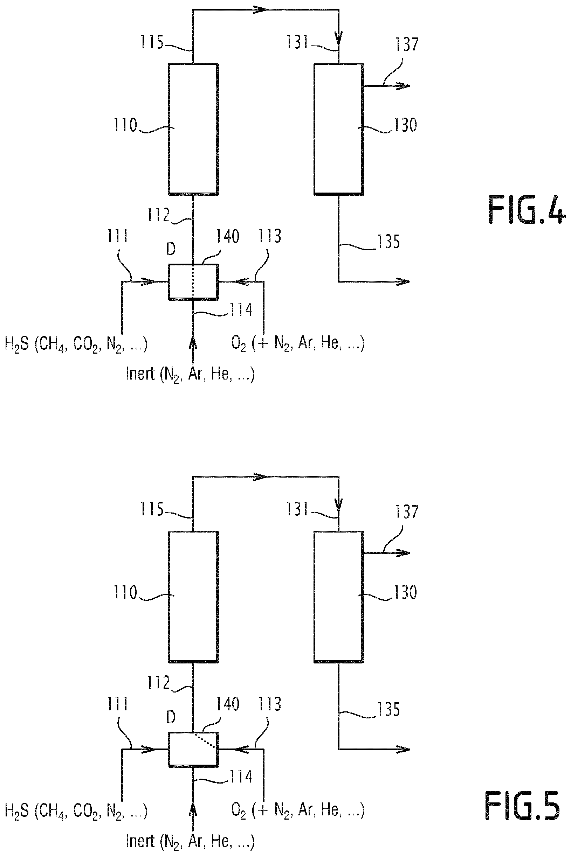

La figure 4 illustre une seconde position du dispositif 140 de permutation du flux de gaz et successive à la première position illustrée en figure 3. Dans cette seconde position illustrée en figure 4, le flux de gaz inerte est introduit via la conduite de circulation 112 dans le réacteur d'oxydation 110 puis circule dans les conduites 115 et 131 vers le condenseur 130. Le gaz inerte permet d'éviter la formation de mélanges potentiellement dangereux au contact du sulfure d'hydrogène et de l'agent oxydant (dioxygène). Ainsi le flux de gaz inerte dans l'installation permet de purger les conduites et réacteur(s).
La figure 5 illustre une troisième position du dispositif 140 de permutation du flux de gaz et successive à la seconde position illustrée en figure 4. Selon la figure 5, le dispositif 140 de permutation du flux de gaz permet la circulation du flux contenant l'agent oxydant, de préférence du dioxygène éventuellement en présence d'autres gaz comme des gaz inertes de la conduite 113 vers la conduite 112 en communication avec le réacteur d'oxydation 110 cette fois-ci fonctionnant comme réacteur d'oxydation du solide réactif présent à l'état réduit dans le réacteur 110. Un flux de gaz appauvri en agent oxydant circule ensuite par les conduites d'évacuation 115 puis 131. Eventuellement, un procédé et une installation, variante de la figure 5 peut prévoir l'évacuation du flux appauvri en agent oxydant ne rentrant pas dans le condenseur 130. Ceci permettrait de limiter le volume de conduite et de dispositif à purger par le gaz inerte. Ce mode de réalisation n'est pas illustré en figure 5.

Ainsi, le dispositif selon la figure 2 peut fonctionner de manière successive et de préférence répétée pour alimenter le réacteur d'oxydation 110 avec les flux suivants :
selon la figure 3, avec un flux gazeux contenant le sulfure d'hydrogène éventuellement d'autres composés gazeux ;
selon la figure 4 avec un flux de gaz inerte ;
selon la figure 5 avec un flux gazeux contenant un agent oxydant.

Le dispositif de permutation 140 peut être constitué d'un ou de plusieurs éléments comme par exemple des vannes de raccord, etc.

Selon la figure 2, le réacteur d'oxydation 110 fonctionne comme un système d'oxydation du sulfure d'hydrogène en soufre et en eau (figure 3) ou comme un système d'oxydation du solide réactif (figure 5).

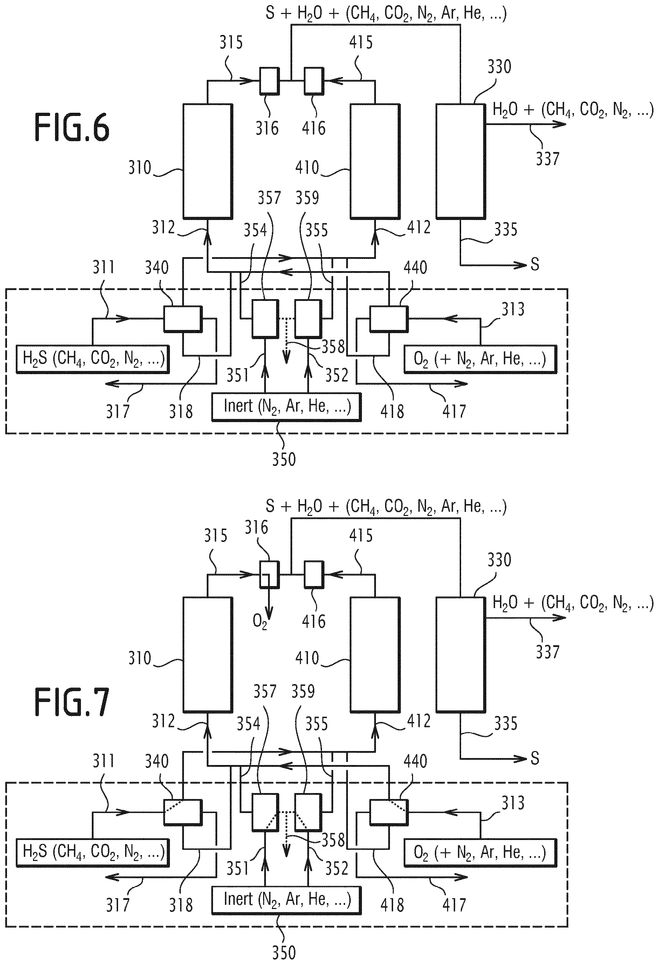

La figure 6 représente une combinaison de réacteurs à alimentation périodique, de manière schématique. Avantageusement, selon la figure 6, le solide réactif est immobilisé dans plusieurs réacteurs 310, 410, par exemple des réacteurs à lit fixe.

Un dispositif de permutation des flux de gaz 340, 440 permet d'alimenter chaque réacteur avantageusement de manière successive et de préférence répétée avec les trois flux gazeux évoqués dans le procédé et l'installation selon la figure 2.

La combinaison d'au moins deux réacteurs 310, 410 permet d'injecter un flux réactif contenant le sulfure d'hydrogène dans un réacteur, par exemple 310, tandis que le flux d'agent oxydant est injecté dans l'autre réacteur, par exemple 410. Un flux de gaz neutre ou inerte assure la purge entre les passages des flux réactifs dans chaque réacteur 310, 410. La figure 6 illustre un exemple avec deux réacteurs. L'invention couvre plus de deux réacteurs ainsi utilisés. Les dispositifs de permutation des gaz 340 et 440 entre les trois sources (H₂S, O₂ et inerte) permettent d'orienter les flux vers les réacteurs respectifs 310, 410 ou éventuellement vers un recyclage du gaz. Les dispositifs de permutation 340 et 440 peuvent être constitués d'une ou d'un ensemble de vannes fonctionnant de manière coordonnée. L'invention comprend d'ailleurs de manière plus générale un dispositif de commande par ordinateur de l'installation et/ou du procédé selon l'invention, et en particulier des dispositifs de permutation évoqués en référence aux figures.

Les figures 7 à 9 illustrent les différents modes de fonctionnement d'une installation et d'un procédé selon la figure 6.

Selon la figure 7, le flux 311 contenant le sulfure d'hydrogène est injecté par la conduite 412 dans le réacteur d'oxydation 410, le dispositif de permutation 340 permettant la communication entre les conduites 311 et 412. Le réacteur d'oxydation 410 fonctionne comme système d'oxydation du sulfure d'hydrogène en présence du solide réactif oxydé qui se réduit au fur et à mesure de l'avancement de l'oxydation de sulfure d'hydrogène. La conduite de sortie 415 amène un flux contenant du soufre et de l'eau ainsi que les éventuels autres gaz contenus dans le flux entrant dans la conduite 311. La conduite 415 est en communication avec un condenseur 330 permettant la séparation du soufre récupéré dans la conduite 335 du flux gazeux évacué par la conduite 337, contenant la vapeur d'eau et les éventuels autres gaz présents. Le flux contenant l'agent oxydant (dioxygène ici) et éventuellement d'autres gaz inertes est amené par la conduite 313 via le dispositif de permutation 440 autorisant la communication de la conduite 313 avec la conduite 312 en communication avec le réacteur d'oxydation 310 du solide réactif présent à l'état réduit. Le réacteur d'oxydation 310 fonctionne comme système oxydant le solide réactif à l'état réduit en particulier pour le régénérer pour une réaction d'oxydation de sulfure d'hydrogène ultérieure. Selon une variante, la conduite 315 comprend un dispositif de permutation des flux gazeux 316 permettant l'évacuation de l'agent oxydant avant sa mise en contact avec la conduite 415, laquelle contient le soufre et l'eau. Cette vanne de permutation 316 est optionnelle. En effet le flux sortant du réacteur d'oxydation 310 peut contenir une faible concentration d'oxygène dont on peut souhaiter éviter la mise en contact avec le flux 415 contenant le soufre et l'eau. Selon ce mode de réalisation, le flux de gaz inerte à partir d'un réservoir 350 circule dans les conduites 351 et 352 typiquement en boucle fermée et ne communique pas avec les réservoirs d'oxydation 310 et 410. Il peut être évacué par une conduite 358 fonctionnant comme boucle de circulation retournant le gaz vers le réservoir 350.

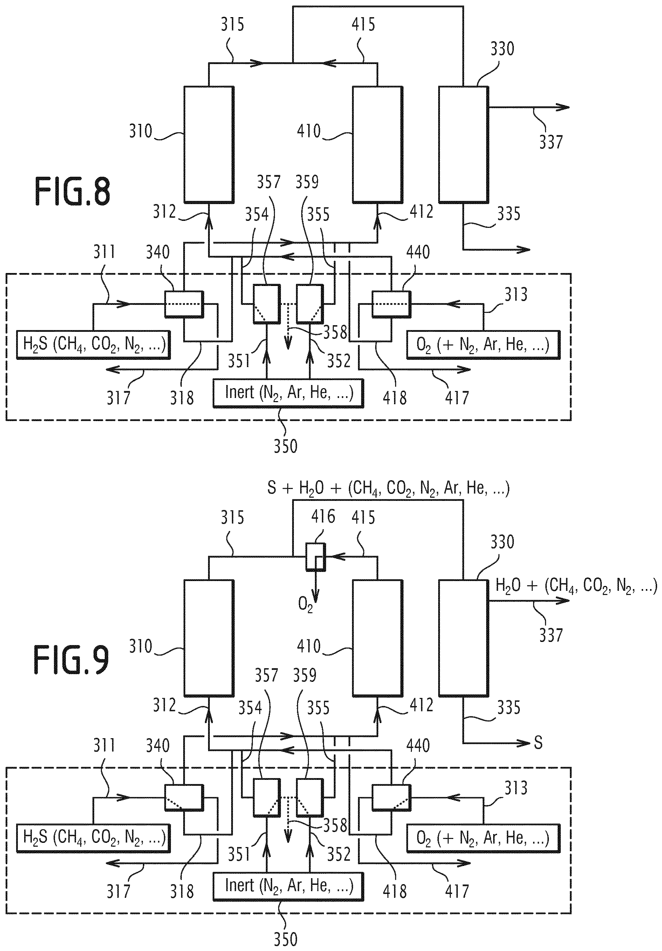

Selon la figure 8, le procédé et l'installation fonctionnent en mode de purge des réacteurs 310 et 410. Ainsi le flux contenant le sulfure d'hydrogène est stoppé ou recyclé et le flux contenant l'agent oxydant est stoppé ou recyclé. Le flux de gaz inerte est envoyé dans les réacteurs 310 et 410. Ainsi, le dispositif de permutation 340 autorise la circulation de la conduite d'entrée 311 contenant le sulfure d'hydrogène vers la conduite de sortie 317, le dispositif de permutation 440 autorise la communication entre la conduite d'entrée 313 contenant l'agent oxydant et la conduite de sortie 417. Les dispositifs de permutation 357 et 359 autorisent la communication des conduites 351 et 354, d'un part et 352 et 355 d'autre part, pour amener le gaz inerte respectivement vers les réacteurs d'oxydation 310 et 410 en purgeant les conduites 312 et 412. Selon une variante, il peut exister un flux faible de gaz inerte lors du fonctionnement selon la figure 7 afin d'isoler tout contact avec de l'oxygène résiduel dans la conduite 312 ou la conduite 412. Selon ce mode de réalisation, les dispositifs de permutation 340 et 440 sont positionnés selon la figure 7 alors que les dispositifs de permutation 357 et 359 sont positionnés selon la figure 8.

Selon la figure 9, le flux contenant le sulfure d'hydrogène est injecté dans le réacteur 310 fonctionnant comme un système d'oxydation du sulfure d'hydrogène. Le flux contenant l'agent oxydant injecté dans le réacteur 410 fonctionnant comme système d'oxydation du solide réactif présent à l'état réduit. Le flux de gaz inerte est en général renvoyé vers un recyclage ou stoppé. Eventuellement selon un mode de réalisation, un flux de gaz inerte permet d'assurer une totale étanchéité avec un éventuel agent oxydant résiduel présent dans les conduites 312 et 412. Selon la figure 9, le dispositif de permutation 340 autorise la communication de la conduite 311 amenant le flux contenant le sulfure d'hydrogène et la conduite 312 en communication avec le réacteur d'oxydation 310. La réaction d'oxydation du sulfure d'hydrogène en présence du solide réactif présent à l'état oxydé est réalisée dans le réacteur 310 puis le flux oxydé contenant le soufre, l'eau et les éventuels autres gaz présents est évacué par la conduite 315 en communication avec le condenseur 330 pour la séparation du soufre par la conduite 335 de la vapeur d'eau et des autres gaz résiduels évacués par la conduite 337. Le dispositif de permutation 340 autorise la communication entre la conduite 313 d'entrée du flux contenant l'agent oxydant et la conduite 412 en communication avec le réacteur d'oxydation 410, lequel fonctionne comme système d'oxydation du solide réactif présent à l'état réduit, avantageusement pour le régénérer pour une réaction ultérieure d'oxydation de sulfure d'hydrogène. Le flux appauvri en oxygène peut être évacué par la conduite 415. De préférence l'installation et le procédé comprennent un dispositif de permutation 416 détournant le flux contenant l'agent oxydant, même appauvri, d'une communication avec la conduite 315. Dans les exemples, les flux en sortie des réacteurs sont mélangés et traités ensemble et il peut être envisagé de traiter les effluents de chaque facteur isolé.

D'autres buts, caractéristiques et avantages de l'invention apparaîtront clairement à l'homme de l'art suite à la lecture de la description explicative qui fait référence à des exemples qui sont donnés seulement à titre d'illustration et qui ne sauraient en aucune façon limiter la portée de l'invention.

Les exemples font partie intégrante de la présente invention et toute caractéristique apparaissant nouvelle par rapport à un état de la technique antérieure quelconque à partir de la description prise dans son ensemble, incluant les exemples, fait partie intégrante de l'invention dans sa fonction et dans sa généralité.

Ainsi, chaque exemple a une portée générale.

D'autre part, dans les exemples, les concentrations des solides sont donnés en pourcentages massiques, sauf indication contraire, les concentrations des gaz sont donnés en pourcentages volumiques, sauf indication contraire, la température est la température ambiante (25°C) et exprimée en degré Celsius, sauf indication contraire, et la pression est la pression atmosphérique (101325 Pa), sauf indication contraire.

### Exemples

L'invention a été mise en œuvre avec des solides réactifs fabriqués au laboratoire. Le comportement du solide réactif à base de V supporté sur TiO₂ a été vérifié en employant un support commercial (Aldrich).

Le TiO₂ (99,8% anatase, Sigma Aldrich) a été lavé pendant une heure à l'eau distillée sous agitation à température ambiante. Après centrifugation, le TiO₂ et les eaux de lavages ont été séparés et le TiO₂ a été récupéré. Cette opération a été répétée 3 fois. Le TiO₂ lavé a été séché d'abord à l'air, puis à l'étuve pendant toute une nuit à 100°C. Enfin, il a été calciné sous air à 450°C pendant 4h avec une rampe de 5°C.min⁻¹.

Le vanadium est déposé par imprégnation à partir de métavanadate d'ammonium (NH₄VO₃). 90,04 mg du précurseur NH₄VO₃ (99%, Sigma Aldrich) ont été introduits dans 20 ml d'acide oxalique 1M. Le mélange a été chauffé sous agitation à 100°C. Après cela, 5 g de TiO₂ préalablement lavés et calcinés ont été ajoutés à la solution, puis le mélange a été maintenu à 100°C sous agitation, jusqu'à évaporation totale du solvant. Enfin, le mélange a été séché à l'étuve pendant toute une nuit, puis calciné sous air à 450°C, pendant 4h, avec une rampe de 5°C.min⁻¹.

Le solide ainsi obtenu présente une fraction massique V/(V+TiO₂)=0,0077 ou 0,77%.

Les tableaux suivants présentent quelques résultats représentatifs. Y sont reportés :
Dans le tableau 1 : la nature du solide employé (la nature du métal, la teneur massique en métal) ainsi que les conditions de réaction (la quantité de solide réactif mise en œuvre, la température de réaction, les concentrations de sulfure d'hydrogène et de dioxygène employés en pourcentages en volume, le débit total de gaz entrant, les conditions d'opération périodique (durées des cycles).

Les essais ont été réalisés dans une installation telle que schématisée en figures 2, 3, 4 et 5. Les débits de gaz ont été établis de manière à alimenter le réacteur d'oxydation (110) avec un débit constant en entrée (112). Les gaz produits en sortie de l'installation (137) ont été analysés au moyen d'un analyseur par spectrométrie de masse en ligne du type Omnistar® de Pfeiffer.

Le tableau 2 représente les résultats obtenus dans les conditions des exemples du tableau 1 lors de l'exposition au H₂S. La conversion de sulfure d'hydrogène et la sélectivité vers S ont été notamment mesurées.

**Tableau 1**

| Ex. N° | Métal (% en masse) | mₛₒₗ (g) | nV₂O₅/nH₂S (rapport molaire) | T (°C) | Concentrations réactifs (vol%) | Cycles (nombre) | Débit entrant (cc/min) | cycle |
|---|---|---|---|---|---|---|---|---|
| 1 | 0,77 | 0,4 | 3 | 150 | 0.2% H₂S 0.1% O₂ | 3 | 100 | 1min.H₂S 1min. O₂ |
| 2 | 0,77 | 0,1 | 0,75 | 150 | 0.2% H₂S 0.5% O₂ | 4 | 100 | 1min.H₂S 1min. O₂ |
| 3 | 0,77 | 0,2 | 1,5 | 150 | 0.2% H₂S + 20%CH₄ 0.5% O₂ | 2 | 100 | 1min. H₂S + CH₄ 1min. O₂ |
| 4 | 0,77 | 0,2 | 1,5 | 250 | 0.2% H₂S + 20%CH₄ 0.5% O₂ | 2 | 100 | 1min. H₂S + CH₄ 1min. O₂ |
| 5 | 0,77 | 0,4 | 3 | 150 | 0.2% H₂S + 20%CH₄ 0.5% O₂ | 30 | 100 | 1min. H₂S + CH₄ 1min. O₂ |
| 6 | 0,77 | 0,4 | 3 | 150 | 0.2% H₂S + 20%CH₄ + 10%CO₂ 0.5% O₂ | 30 | 100 | 1min. H₂S + CH₄ + CO₂ 1min. O₂ |

| | | | | | | | | |
|---|---|---|---|---|---|---|---|---|
| mₛₒ étant la masse de solide réactif cc/min étant des centimètres cubes par minutes | | | | | | | | |

**Tableau 2**

| Exemple N° | Conversion H₂S (%) ±1 | Sélectivité S (%) ±1 | Conversion CH₄ (%) ±1 | Conversion CO₂ (%) ±1 | Conversion O₂ (%) ±1 |
|---|---|---|---|---|---|
| 1 | 100 | 100 | - | - | 100 |
| 2 | 60-70 | 100 | - | - | 5-10 |
| 3 | 90-95 | 100 | 0 | - | 20-30 |
| 4 | 95-100 | 85-90 | 0 | - | 20-25 |
| 5 | 100 | 100 | 0 | - | 20-30 |
| 6 | 100 | 100 | 0 | 0 | 20-30 |

La conversion de H₂S est très élevée (supérieure à 99% et proche de 100% dans les exemples n°1 et 4 à 6). La conversion en oxygène est inférieure car, dans les exemples (sauf n°1), les essais ont été réalisés avec un excès d'oxygène.

La sélectivité du S est très élevée (supérieure à 99% et proche de100%, sauf exemple 4) avec l'absence de SO₂ mesurable en sortie. Une valeur inférieure est indicative de formation de SO₂.

Les exemples n°5 et n°6 sont composées de 30 cycles complets et montrent une excellente stabilité du comportement des solides. Dans ce cas-là, les valeurs indiquées sont des moyennes intégrées sur les 6 derniers cycles réalisés.

Ces résultats montrent que dans des conditions très larges de fonctionnement tant en température et de quantités du solide, les performances du système sont proches de l'idéal en termes de réactivité.

Les exemples supportent la robustesse du procédé selon l'invention lorsque les conditions ci-dessus sont respectées, mais également son adaptabilité à des conditions de fonctionnent très variables. Ils démontrent aussi une grande marge de manœuvre d'optimisation, en particulier par :
- Le contrôle de la quantité et de la nature de la phase active, voire multi-métallique en associant plusieurs éléments afin d'optimiser le processus d'activation du H₂S et sélectivité vers le soufre et l'eau ;
- Le contrôle de l'apport d'oxygène depuis l'oxyde ou du support en modifiant sa nature (oxydes, oxydes mixtes, oxydes dopés) ;
- Le contrôle de l'oxydation totale du catalyseur et du soufre grâce à l'apport de dioxygène dans la deuxième phase du processus.

Dans le cadre plus spécifique de l'utilisation du biogaz, ce processus est notamment avantageux car on élimine l'impureté d'H₂S sans convertir ni CH₄, ni CO₂.

## Revendications

1. Installation de traitement du sulfure d'hydrogène, ladite installation comprenant au moins un système d'oxydation du sulfure d'hydrogène en soufre (S), de préférence le sulfure d'hydrogène et le soufre étant sous forme gazeuse, et en eau (H₂O) par un solide réactif mettant en œuvre la réaction H₂S + sol-O → sol-R + H₂O + S où sol-O et sol-R symbolisent des constituants du solide réactif sous formes oxydée et réduite, respectivement, et au moins un système d'oxydation par un agent oxydant du solide réactif présent à l'état réduit, le système d'oxydation du sulfure d'hydrogène en soufre et le système d'oxydation du solide réactif étant agencés pour que le sulfure d'hydrogène ne soit pas mis en contact avec l'agent oxydant le solide réactif.

2. Installation selon la revendication 1, **caractérisée en ce qu'**elle comprend une conduite d'alimentation d'un flux comprenant du sulfure d'hydrogène vers un système d'oxydation du sulfure d'hydrogène en soufre et en eau et une conduite d'évacuation d'un flux comprenant du soufre.

3. Installation selon la revendication 2, **caractérisée en ce qu'**elle comprend, en aval du système d'oxydation du sulfure d'hydrogène en soufre sous forme gazeuse, un dispositif de séparation de soufre du flux comprenant initialement le soufre, ledit dispositif de séparation étant de préférence un dispositif de condensation du soufre sous forme liquide ou solide.

4. Installation selon l'une quelconque des revendications 1 à 3, **caractérisée en ce que** l'installation comprend un ou plusieurs dispositifs (140, 340, 440) de permutation entre l'entrée (111, 311, 318) du sulfure d'hydrogène dans le système d'oxydation (110, 310, 410) du sulfure d'hydrogène en soufre et l'entrée (113, 313, 418) de l'agent oxydant le solide réactif dans le système d'oxydation (110, 310, 410) du solide réactif.

5. Installation selon l'une quelconque des revendications 1 à 4, **caractérisée en ce que** le système d'oxydation du sulfure d'hydrogène en soufre comprend un réacteur d'oxydation du sulfure d'hydrogène en présence d'un solide réactif présent à l'état oxydé.

6. Installation selon l'une quelconque des revendications 1 à 5, **caractérisée en ce que** le système d'oxydation du solide réactif comprend une alimentation en au moins un agent oxydant, comme par exemple de l'oxygène, par exemple sous forme gazeuse.

7. Installation selon l'une quelconque des revendications 1 à 6, **caractérisée en ce qu'**elle comprend une boucle de recyclage du solide réactif, ladite boucle comprenant un système d'oxydation du solide réactif présent à l'état réduit en présence d'un agent oxydant et un système de réduction du solide réactif présent à l'état oxydé, ledit système de réduction du solide réactif formant également ledit système d'oxydation du sulfure d'hydrogène en présence d'un solide réactif présent à l'état oxydé.

8. Installation selon l'une quelconque des revendications 1 à 7, **caractérisée en ce que** le solide réactif présente la formule chimique suivante :
El1-Ox1
où El1 comprend ou consiste en l'un des éléments suivants pris isolément ou selon l'une quelconque de leurs combinaisons et choisi parmi: Bi, Co, Cu, Fe, Ir, Mo, Pb, Pd, Re, Rh, Ru, Sb, V et les oxydes comprenant un ou plusieurs de ces éléments;
où Ox1 comprend ou consiste en l'un des éléments suivants pris isolément ou en combinaison et choisi parmi: Al, Ce, Ti, Mg, Si, Ta et leurs oxydes;

9. Installation selon l'une quelconque des revendications 1 à 8, **caractérisée en ce que** le flux comprenant du sulfure d'hydrogène comprend un hydrocarbure, par exemple du méthane et/ou du monoxyde et/ou dioxyde de carbone, éventuellement en présence d'un gaz inerte comme par exemple le diazote.

10. Installation selon l'une quelconque des revendications 1 à 9, **caractérisée en ce qu'**elle comprend un premier réacteur formant un système d'oxydation du sulfure d'hydrogène en soufre et un second réacteur formant un système d'oxydation du solide réactif, le premier réacteur étant alimenté par un flux contenant du sulfure d'hydrogène lorsque le premier réacteur forme un système d'oxydation du sulfure d'hydrogène en soufre, et le second réacteur étant alimenté par un flux contenant au moins un agent oxydant lorsque le second réacteur forme un système d'oxydation du solide réactif, le solide réactif circulant à l'état réduit du premier réacteur vers le second réacteur et à l'état oxydé du second réacteur vers le premier réacteur.

11. Installation selon l'une quelconque des revendications 1 à 9, **caractérisée en ce qu'**elle comprend au moins un réacteur d'oxydation (110) formant alternativement un système d'oxydation du sulfure d'hydrogène en soufre et formant un système d'oxydation du solide réactif, le réacteur d'oxydation (110) étant alternativement alimenté par un flux (111) contenant du sulfure d'hydrogène lorsque le réacteur forme un système d'oxydation du sulfure d'hydrogène en soufre, et étant alimenté par un flux (113) contenant au moins un agent oxydant lorsque le réacteur d'oxydation (110) forme un système d'oxydation du solide réactif, le solide réactif étant de préférence immobilisé dans le réacteur d'oxydation (110).

12. Installation selon l'une quelconque des revendications 1 à 9, **caractérisée en ce qu'**elle comprend au moins deux réacteurs (310, 410) formant chacun alternativement et inversement un système d'oxydation du sulfure d'hydrogène en soufre et un système d'oxydation du solide réactif, un premier réacteur (310) étant alternativement alimenté (i) par un flux contenant du sulfure d'hydrogène (311) lorsque le réacteur forme un système d'oxydation du sulfure d'hydrogène en soufre, ou (ii) par un flux contenant au moins un agent oxydant (313) lorsque le premier réacteur (310) forme un système d'oxydation du solide réactif, et un second réacteur (410) étant alternativement alimenté (i) par un flux contenant du sulfure d'hydrogène (311) lorsque le second réacteur (410) forme un système d'oxydation du sulfure d'hydrogène en soufre et lorsque le premier réacteur (310) forme un système d'oxydation du solide réactif, ou (ii) par un flux contenant au moins un agent oxydant (313) lorsque le second réacteur (410) forme un système d'oxydation du solide réactif et lorsque le premier réacteur (310) forme un système d'oxydation du sulfure d'hydrogène en soufre, le solide réactif étant de préférence immobilisé dans le premier réacteur (310) et le second réacteur (410).

13. Procédé de traitement d'au moins un flux comprenant du sulfure d'hydrogène, **caractérisé en ce que** le procédé comprend l'alternance, de préférence répétée, d'une étape d'oxydation du sulfure d'hydrogène en soufre et eau en présence d'un solide réactif présent à l'état oxydé, et réduit lors de l'oxydation du sulfure d'hydrogène, mettant en œuvre la réaction H₂S + sol-O → sol-R + H₂O + S où sol-O et sol-R symbolisent des constituants du solide réactif sous formes oxydée et réduite, respectivement, et d'une étape d'oxydation du solide réactif présent à l'état réduit par au moins un agent oxydant pour obtenir un solide réactif à l'état oxydé, ledit procédé comprenant l'obtention d'un flux comprenant du soufre par oxydation du sulfure d'hydrogène.

14. Procédé selon la revendication 13, **caractérisé en ce que** l'étape d'oxydation du sulfure d'hydrogène se réalise en l'absence d'agent servant à oxyder le solide réactif, et en particulier en l'absence de dioxygène.

15. Procédé selon la revendication 13 ou 14, **caractérisé en ce que** l'oxydation du sulfure d'hydrogène est réalisée dans des conditions limitant l'oxydation totale du sulfure d'hydrogène en oxyde de soufre.

16. Procédé selon l'une quelconque des revendications 13 à 15, **caractérisé en ce que** l'oxydation du sulfure d'hydrogène se réalise à une température allant de 120°C à 250°C, par exemple de 150°C à 250°C ou encore de 120°C à 200°C.

17. Procédé selon l'une quelconque des revendications 13 à 16, **caractérisé en ce que** le flux comprenant le sulfure d'hydrogène présente une concentration en sulfure d'hydrogène dont la transformation stœchiométrique en soufre et eau nécessiterait un mélange comprenant du sulfure d'hydrogène et du dioxygène situé dans le domaine d'explosivité.

18. Procédé selon l'une quelconque des revendications 13 à 17, **caractérisé en ce que** l'oxydation du sulfure d'hydrogène présente une sélectivité pour la production de soufre supérieure à 90%, et de préférence supérieure à 95%.

19. Procédé selon l'une quelconque des revendications 13 à 18, **caractérisé en ce que** l'oxydation du sulfure d'hydrogène présente une conversion en soufre supérieure à 50%, et de préférence supérieure à 80%, et encore de préférence supérieure à 90%.

20. Installation mettant en œuvre un procédé tel que défini selon l'une quelconque des revendications 13 à 19.

## Patentansprüche

1. Anlage zum Behandeln von Schwefelwasserstoff, wobei die Anlage aufweist mindestens ein System zum Oxidieren von Schwefelwasserstoff zu Schwefel (S), wobei der Schwefelwasserstoff und der Schwefel vorzugsweise in gasförmiger Form vorliegen, und zu Wasser (H₂O) mittels eines reaktiven Feststoffs, wobei die Reaktion H₂S + sol-O → sol-R + H₂O + S durchgeführt wird, wobei sol-O und sol-R Bestandteile des reaktiven Feststoffs in oxidierter bzw. reduzierter Form symbolisieren, und mindestens ein System zum Oxidieren des im reduzierten Zustand vorliegenden reaktiven Feststoffs durch ein Oxidationsmittel, wobei das System zum Oxidieren von Schwefelwasserstoff zu Schwefel und das System zum Oxidieren des reaktiven Feststoffs so angeordnet sind, dass der Schwefelwasserstoff nicht mit dem den reaktiven Feststoff oxidierenden Mittel in Kontakt gebracht wird.

2. Anlage gemäß Anspruch 1, **dadurch gekennzeichnet, dass** sie eine Leitung zum Zuführen eines Schwefelwasserstoff aufweisenden Stroms in Richtung zu einem System zum Oxidieren von Schwefelwasserstoff zu Schwefel und Wasser und eine Leitung zum Ableiten eines Schwefel aufweisenden Stroms aufweist.

3. Anlage gemäß Anspruch 2, **dadurch gekennzeichnet, dass** sie stromabwärts des Systems zum Oxidieren von Schwefelwasserstoff zu Schwefel in gasförmiger Form eine Vorrichtung zum Abtrennen von Schwefel von dem anfangs Schwefel aufweisenden Strom aufweist, wobei die Abtrennvorrichtung vorzugsweise eine Vorrichtung zum Kondensieren des Schwefels in flüssiger oder fester Form ist.

4. Anlage gemäß irgendeinem der Ansprüche 1 bis 3,
**dadurch gekennzeichnet, dass** die Anlage eine oder mehrere Vorrichtungen (140, 340, 440) zur Permutation zwischen dem Einlass (111, 311, 318) des Schwefelwasserstoffs in das System (110, 310, 410) zum Oxidieren von Schwefelwasserstoff zu Schwefel und dem Einlass (113, 313, 418) des Mittels, welches den reaktiven Feststoff oxidiert, in das System (110, 310, 410) zum Oxidieren des reaktiven Feststoffs aufweist.

5. Anlage gemäß irgendeinem der Ansprüche 1 bis 4,
**dadurch gekennzeichnet, dass** das System zum Oxidieren von Schwefelwasserstoff zu Schwefel einen Reaktor zum Oxidieren von Schwefelwasserstoff in Gegenwart eines im oxidierten Zustand vorliegenden reaktiven Feststoffs aufweist.

6. Anlage gemäß irgendeinem der Ansprüche 1 bis 5,
**dadurch gekennzeichnet, dass** das System zum Oxidieren des reaktiven Feststoffs eine Zufuhr von mindestens einem Oxidationsmittel, wie zum Beispiel Sauerstoff, beispielsweise in gasförmiger Form, aufweist.

7. Anlage gemäß irgendeinem der Ansprüche 1 bis 6,
**dadurch gekennzeichnet, dass** sie eine Schleife zum Rückgewinnen des reaktiven Feststoffs aufweist, wobei die Schleife ein System zum Oxidieren des im reduzierten Zustand vorliegenden reaktiven Feststoffs in Gegenwart eines Oxidationsmittels und ein System zum Reduzieren des im oxidierten Zustand vorliegenden reaktiven Feststoffs aufweist, wobei das System zum Reduzieren des reaktiven Feststoffs auch das System zum Oxidieren von Schwefelwasserstoff in Gegenwart eines im oxidierten Zustand vorliegenden reaktiven Feststoffs bildet.

8. Anlage gemäß irgendeinem der Ansprüche 1 bis 7,
**dadurch gekennzeichnet, dass** der reaktive Feststoff die folgende chemische Formel hat:
El1-Ox1
wobei El1 aufweist oder besteht aus einem der folgenden Elemente einzeln oder gemäß irgendeiner ihrer Kombinationen und ausgewählt aus: Bi, Co, Cu, Fe, Ir, Mo, Pb, Pd, Re, Rh, Ru, Sb, V und Oxiden, die eines oder mehrere dieser Elemente aufweisen;
wobei Ox1 aufweist oder besteht aus einem der folgenden Elemente einzeln oder in Kombination und ausgewählt aus: Al, Ce, Ti, Mg, Si, Ta und deren Oxiden.

9. Anlage gemäß irgendeinem der Ansprüche 1 bis 8,
**dadurch gekennzeichnet, dass** der Schwefelwasserstoff aufweisende Strom einen Kohlenwasserstoff, z.B. Methan und/oder Kohlenmonoxid und/oder Kohlendioxid, gegebenenfalls in Gegenwart eines Inertgases, z.B. Distickstoff, aufweist.

10. Anlage gemäß irgendeinem der Ansprüche 1 bis 9,
**dadurch gekennzeichnet, dass** sie aufweist einen ersten Reaktor, der ein System zum Oxidieren von Schwefelwasserstoff zu Schwefel bildet, und einen zweiten Reaktor, der ein System zum Oxidieren des reaktiven Feststoffs bildet, wobei der erste Reaktor durch einen Schwefelwasserstoff enthaltenden Strom gespeist wird, wenn der erste Reaktor ein System zum Oxidieren von Schwefelwasserstoff zu Schwefel bildet, und der zweite Reaktor durch einen Strom gespeist wird, der mindestens ein Oxidationsmittel enthält, wenn der zweite Reaktor ein System zum Oxidieren des reaktiven Feststoffs bildet, wobei der reaktive Feststoff im reduzierten Zustand vom ersten Reaktor zum zweiten Reaktor und im oxidierten Zustand vom zweiten Reaktor zum ersten Reaktor zirkuliert.

11. Anlage gemäß irgendeinem der Ansprüche 1 bis 9,
**dadurch gekennzeichnet, dass** sie mindestens einen Oxidationsreaktor (110) aufweist, der abwechselnd ein System zum Oxidieren von Schwefelwasserstoff zu Schwefel bildet und ein System zum Oxidieren des reaktiven Feststoffs bildet, wobei der Oxidationsreaktor (110) abwechselnd durch einen Schwefelwasserstoff enthaltenden Strom (111) gespeist wird, wenn der Reaktor ein System zum Oxidieren von Schwefelwasserstoff zu Schwefel bildet, und durch einen Strom (113) gespeist wird, der mindestens ein Oxidationsmittel enthält, wenn der Oxidationsreaktor (110) ein System zum Oxidieren des reaktiven Feststoffs bildet, wobei der reaktive Feststoff vorzugsweise im Oxidationsreaktor (110) immobilisiert ist.

12. Anlage gemäß irgendeinem der Ansprüche 1 bis 9,
**dadurch gekennzeichnet, dass** sie aufweist mindestens zwei Reaktoren (310, 410), die jeweils abwechselnd und invers ein System zum Oxidieren von Schwefelwasserstoff zu Schwefel und ein System zum Oxidieren des reaktiven Feststoffs bilden, wobei ein erster Reaktor (310) abwechselnd gespeist wird (i) durch einen Strom, der Schwefelwasserstoff (311) enthält, wenn der Reaktor ein System zum Oxidieren von Schwefelwasserstoff zu Schwefel bildet, oder (ii) durch einen Strom, der mindestens ein Oxidationsmittel (313) enthält, wenn der erste Reaktor (310) ein System zum Oxidieren des reaktiven Feststoffs bildet, und ein zweiter Reaktor (410) abwechselnd gespeist wird (i) durch einen Schwefelwasserstoff enthaltenden Strom (311), wenn der zweite Reaktor (410) ein System zum Oxidieren von Schwefelwasserstoff zu Schwefel bildet und wenn der erste Reaktor (310) ein System zum Oxidieren des reaktiven Feststoffs bildet, oder (ii) durch einen Strom, der mindestens ein Oxidationsmittel (313) enthält, wenn der zweite Reaktor (410) ein System zum Oxidieren des reaktiven Feststoffs bildet und wenn der erste Reaktor (310) ein System zum Oxidieren von Schwefelwasserstoff zu Schwefel bildet, wobei der reaktive Feststoff vorzugsweise im ersten Reaktor (310) und im zweiten Reaktor (410) immobilisiert ist.

13. Verfahren zum Behandeln mindestens eines Schwefelwasserstoff enthaltenden Stroms, **dadurch gekennzeichnet, dass** das Verfahren aufweist das Abwechseln, vorzugsweise wiederholt, eines Schrittes des Oxidierens von Schwefelwasserstoff zu Schwefel und Wasser in Gegenwart eines reaktiven Feststoffs, der im oxidierten Zustand vorliegt und während der Oxidation von Schwefelwasserstoff reduziert wird, wobei die Reaktion H₂S + sol-O → sol-R + H₂O + S durchgeführt wird, wobei sol-O und sol-R Bestandteile des reaktiven Feststoffs in oxidierter Form bzw. reduzierter Form symbolisieren, und eines Schrittes des Oxidierens des im reduzierten Zustand vorliegenden reaktiven Feststoffs durch mindestens ein Oxidationsmittel, um einen reaktiven Feststoff im oxidierten Zustand zu erhalten, wobei das Verfahren das Erhalten eines Schwefel aufweisenden Stroms durch Oxidieren von Schwefelwasserstoff aufweist.

14. Verfahren gemäß Anspruch 13, **dadurch gekennzeichnet, dass** der Schritt des Oxidierens von Schwefelwasserstoff in Abwesenheit eines Mittels, das zum Oxidieren des reaktiven Feststoffs dient, und insbesondere in Abwesenheit von Disauerstoff erfolgt.

15. Verfahren gemäß Anspruch 13 oder 14, **dadurch gekennzeichnet, dass** das Oxidieren von Schwefelwasserstoff unter Bedingungen durchgeführt wird, die die Gesamtoxidation von Schwefelwasserstoff zu Schwefeloxid begrenzen.

16. Verfahren gemäß irgendeinem der Ansprüche 13 bis 15, **dadurch gekennzeichnet, dass** das Oxidieren von Schwefelwasserstoff bei einer Temperatur im Bereich von 120°C bis 250°C, z.B. von 150°C bis 250°C oder von 120°C bis 200°C durchgeführt wird.

17. Verfahren gemäß irgendeinem der Ansprüche 13 bis 16, **dadurch gekennzeichnet, dass** der Schwefelwasserstoff enthaltende Strom eine Konzentration an Schwefelwasserstoff aufweist, deren stöchiometrische Umsetzung zu Schwefel und Wasser ein Gemisch erfordern würde, das Schwefelwasserstoff und Disauerstoff im explosiven Bereich aufweist.

18. Verfahren gemäß irgendeinem der Ansprüche 13 bis 17, **dadurch gekennzeichnet, dass** das Oxidieren von Schwefelwasserstoff eine Selektivität für die Herstellung von Schwefel von mehr als 90 %, vorzugsweise mehr als 95 %, aufweist.

19. Verfahren gemäß irgendeinem der Ansprüche 13 bis 18, **dadurch gekennzeichnet, dass** das Oxidieren von Schwefelwasserstoff eine Umwandlung in Schwefel von mehr als 50 %, vorzugsweise mehr als 80 % und besonders bevorzugt mehr als 90 % aufweist.

20. Anlage, die ein gemäß irgendeinem der Ansprüche 13 bis 19 definiertes Verfahren durchführt.

## Claims

1. Hydrogen sulfide treatment installation, wherein the installation comprises at least one system for oxidizing hydrogen sulphide to sulfur (S), preferably hydrogen sulphide and sulfur in gaseous form, and to water (H₂O) by a solid reagent implementing the reaction H₂S + sol-O → sol-R + H₂O + S where sol-O and sol-R respectively symbolize constituents of the solid reagent in oxidized and reduced forms, and at least one oxidizing system with an oxidizing agent of the solid reagent present in the reduced state, wherein the system oxidizing the hydrogen sulfide and the system oxidizing the solid reagent are so arranged that the hydrogen sulfide is not brought into contact with the agent oxidizing the solid reagent.

2. Installation according to claim 1, **characterized in that** it comprises a supply duct for a flow comprising hydrogen sulfide to a hydrogen sulfide oxidizing system in sulfur and water and a duct for discharge of a flow comprising sulfur.

3. Installation according to claim 2, **characterized in that** it comprises, downstream of the system oxidizing the hydrogen sulfide in gaseous sulfur, a sulfur separation device of the flow initially comprising sulfur, wherein the separation device is preferably a device for condensing sulfur in liquid or solid form.

4. Installation according to any one of the claims 1 to 3, **characterized in that** the installation comprises one or more devices (140, 340, 440) switching between the inlet (111, 311, 318) of the hydrogen sulfide in the system (110, 310, 410) oxidizing the hydrogen sulfide to sulfur and the inlet (113, 313, 418) of the agent oxidizing the solid reagent to the system (110, 310 410) oxidizing the solid reagent.

5. Installation according to any one of the claims 1 to 4, **characterized in that** the system of oxidizing the hydrogen sulfide to sulfur comprises a reactor oxidizing the hydrogen sulfide in the presence of a solid reagent present in the oxidized state.

6. Installation according to any one of the claims 1 to 5, **characterized in that** the system oxidizing the solid reagent comprises a supply of at least one oxidizing agent, such as oxygen, for example in gaseous form.

7. Installation according to any one of the claims 1 to 6, **characterized in that** it comprises a loop for recycling the solid reagent, wherein the loop comprises an oxidizing system of the solid reagent present in the reduced state in the presence of an oxidizing agent and a system for reducing the solid reagent present in the oxidized state, wherein the system for reducing the solid reagent also forms the system oxidizing the hydrogen sulfide in the presence of a solid reagent present in the oxidized state.

8. Installation according to any one of the claims 1 to 7, **characterized in that** the solid reagent has the following chemical formula:
El1-Ox1
where El1 comprises or consists of one of the following elements taken alone or in any of their combinations and selected from among: Bi, Co, Cu, Fe, Ir, Mo, Pb, Pd, Re, Rh, Ru, Sb, V and the oxides comprising one or more of these elements;
wherein Ox1 comprises or consists of one of the following elements taken alone or in combination and selected from among: Al, Ce, Ti, Mg, Si, Ta and their oxides;

9. Installation according to any one of the claims 1 to 8, **characterized in that** the flow comprising hydrogen sulphide comprises a hydrocarbon, for example methane and/or carbon monoxide and/or dioxide, optionally in the presence of an inert gas such as, for example, dinitrogen.

10. Installation according to any one of the claims 1 to 9, **characterized in that** it comprises a first reactor forming a system oxidizing the hydrogen sulfide to sulfur and a second reactor forming a system oxidizing the solid reagent, wherein the first reactor is supplied with a flow containing hydrogen sulphide, while the first reactor forms a system for oxidizing hydrogen sulphide to sulfur, and the second reactor is fed with a flow containing at least one oxidizing agent when the second reactor forms a system oxidizing the solid reagent, wherein the solid reagent circulating in the reduced state from the first reactor to the second reactor and, in the oxidized state of the second reactor, to the first reactor.

11. Installation according to any one of the claims 1 to 9, **characterized in that** it comprises at least one oxidizing reactor (110) alternately forming a system oxidizing the hydrogen sulfide to sulfur and forming a system oxidizing the solid reagent, wherein the oxidizing reactor (110) is alternately fed by a flow (111) containing hydrogen sulphide when the reactor forms a system for oxidizing the hydrogen sulphide to sulfur, and is supplied with a flow (113) containing at least one oxidizing agent when the oxidizing reactor (110) forms a system oxidizing the solid reagent, wherein the solid reagent is preferably immobilized in the oxidizing reactor (110).

12. Installation according to any one of the claims 1 to 9, **characterized in that** it comprises at least two reactors (310, 410), wherein each forms alternately and conversely a system of oxidizing the hydrogen sulfide to sulfur and a system of oxidizing the solid reagent, wherein a first reactor (310) is alternately fed (i) with a flow containing hydrogen sulphide (311) when the reactor forms a system for oxidizing the hydrogen sulphide to sulfur, or (ii) by a flow containing at least one oxidizing agent (313) when the first reactor (310) forms a system for oxidizing of the solid reagent, and wherein a second reactor (410) is alternately fed (i) by a flow containing hydrogen sulphide (311) when the second reactor (410) forms a system for oxidizing the hydrogen sulfide to sulfur, and when the first reactor (310) forms a system for oxidizing the solid reagent, or (ii) by a flow containing at least one oxidizing agent (313) when the second reactor (410) forms a system for oxidizing the solid reagent and when the first reactor (310) forms a system for oxidizing the hydrogen sulphide to sulfur, wherein the solid reagent is preferably immobilized in the first reactor (310) and the second reactor (410).

13. Method for treating at least one flow comprising hydrogen sulphide, **characterized in that** the method comprises the alternation, preferably repeated, of a step of oxidizing the hydrogen sulphide to sulfur and water in the presence of a solid reagent in the oxidized state, and reduced during the oxidizing of the hydrogen sulphide, by implementing the reaction H₂S + sol-O → sol-R + H₂O + S where sol-O and sol R respectively symbolize constituents of the solid reagent in oxidized and reduced forms, and of a step of oxidizing the solid reagent present in the reduced state by at least one oxidizing agent in order to obtain a solid reagent in the oxidized state, wherein the method comprises obtaining a flow comprising sulfur by oxidizing the hydrogen sulfide.

14. Method according to claim 13, **characterized in that** the oxidizing step of hydrogen sulfide is carried out in the absence of an agent for oxidizing the solid reagent, and, in particular, in the absence of oxygen.

15. Method according to claim 13 or 14, **characterized in that** the oxidizing of the hydrogen sulfide is carried out under conditions limiting the complete oxidizing of hydrogen sulfide to sulfur oxide.

16. Method according to any one of the claims 13 to 15, **characterized in that** the oxidizing of hydrogen sulphide is carried out at a temperature ranging from 120°C to 250°C, for example from 150°C to 250°C, or from 120°C to 200°C.

17. Method according to any one of the claims 13 to 16, **characterized in that** the flow comprising hydrogen sulphide has a hydrogen sulphide concentration whose stoichiometric conversion to sulfur and water would require a mixture comprising hydrogen sulphide and oxygen in the explosive range.

18. Method according to any one of the claims 13 to 17, **characterized in that** the oxidizing of hydrogen sulphide has a selectivity for the production of sulfur greater than 90%, and preferably greater than 95%.

19. Method according to any one of the claims 13 to 18, **characterized in that** the oxidizing of hydrogen sulfide has a conversion to sulfur greater than 50%, and preferably greater than 80%, and more preferably greater than 90%.

20. Installation implementing a method as defined in any one of the claims 13 to 19.
